# EUROPÄISCHE PATENTANMELDUNG

(11) **EP 0 913 275 A2**
(43) Veröffentlichungstag der Anmeldung: **06.05.1999**
(21) Anmeldenummer: 98250378.1
(22) Anmeldetag: 23.10.1998
(51) Int. Cl.: B60C 27/06

(54) **Verschlusshaken für Reifenketten**

(30) Priorität: 24.10.1997 DE 29719671 U
(71) Anmelder: RUD-KETTENFABRIK RIEGER & DIETZ GMBH U. CO., 73432 Aalen-Unterkochen (DE)
(72) Erfinder: Schaffert, Thilo Ernst, Dipl.-Ing., 74423 Obersontheim (DE); Liesch, Eugen, 73432 Aalen-Waldhausen (DE)
(74) Vertreter: Böning, Manfred, Dr.-Ing.

(57) **Zusammenfassung**

Um bei einem Verschlußhaken (1) für Seitenteile einer Reifenkette auch bei gelockertem Kettennetz einem ungewollten Öffnen des Hakens entgegenzuwirken, ist der Haken mit einem im wesentlichen V-förmigen Hakenmantel (9) und einem zum Rücken (8) des Hakens gerichteten Ende (10) der Hakenzinke (5) versehen. Auf diese Art und Weise wird erreicht, daß ein sich an den Hakengrund (6) anschließender Abschnitt (7) der Hakenzinke (5) zusammen mit dem zum Rücken (8) des Hakens gerichteten Ende (10) ein Fanghaken für ein in den Haken eingehängtes gelockertes Kettenglied bilden.

## Beschreibung

Die Erfindung betrifft einen Verschlußhaken für Seitenteile einer Reifenkette mit einem im wesentlichen C-förmigen Grundkörper, dessen eines Ende unverlierbar mit Teilen der Reifenkette verbindbar ist und dessen anderes Ende einen Haken für ein zum Schließen des jeweiligen Seitenteiles dienendes Kettenglied bildet.

Ein Verschlußhaken der vorstehenden Art ist aus der AT 388 708 B bekannt. Der bekannte Haken weist eine gerade Hakenzinke auf, die mit dem Rücken des Hakens ein im wesentlichen U-förmiges Hakenmaul begrenzt. Der bekannte Verschlußhaken genügt so lange den an ihn zu stellenden Ansprüchen, wie ein ordnungsgemäßer Sitz der Reifenkette auf dem Reifen gewährleistet ist. Es hat sich jedoch gezeigt, daß beispielsweise durch Nichteinhaltung eines vorgegebenen Reifendruckes oder infolge fortschreitenden Verschleißes der Reifenkette mit Lockerungserscheinungen gerechnet werden muß, die zu einem ungewollten Öffnen des Verschlusses und in ungünstigen Fällen zu einem Verrutschen der Reifenketten auf die Rückseite des Reifens führen können, und letzteres regelmäßig nicht ohne Beschädigungen von Fahrzeugteilen zu verursachen.

Der Erfindung liegt die Aufgabe zugrunde, einen Verschlußhaken der in Betracht gezogenen Art dahingehend zu verbessern, daß das Risiko eines unbeabsichtigten Aushakens des in den Verschlußhaken eingehängten Kettengliedes deutlich reduziert wird. Diese Aufgabe wird bei einem gattungsgemäßen Verschlußhaken dadurch gelöst, daß der Rücken des Hakens und ein sich an den das in ihn eingehängte Kettenglied abstützenden Hakengrund anschließender Abschnitt der Hakenzinke ein im wesentlichen V-förmiges Hakenmaul begrenzen und daß das zum Rücken des Hakens gerichtete freie Ende der Hakenzinke zusammen mit dem sich an den Hakengrund anschließenden Abschnitt der Hakenzinke einen Fanghaken für das sich normalerweise im Hakengrund abstützende Kettenglied im Falle einer Lockerung des jeweiligen Seitenteiles bildet.

Weitere Einzelheiten und Merkmale der Erfindung ergeben sich aus den Unteransprüchen und der nachstehenden Beschreibung einer in der beigefügten Zeichnung dargestellten besonders vorteilhaften Ausführungsform der Erfindung. Es zeigen
Fig. 1 die Seitenansicht eines Verschlußhakens,
Fig. 2 die Seitenansicht des unverlierbar mit einem Seitenteil einer Reifenkette verbundenen Verschlußhakens gemäß Fig. 1 zu Beginn eines Schließvorganges,
Fig. 3 eine Zwischenstufe des Schließvorganges,
Fig. 4 die in den Figuren 2 und 3 dargestellten Teile in ihrer Endlage an einer ordnungsgemäß montierten Reifenkette und
Fig. 5 die in den Figuren 2 bis 4 gezeigten Teile im Falle einer Lockerung des Kettennetzes der Reifenkette.

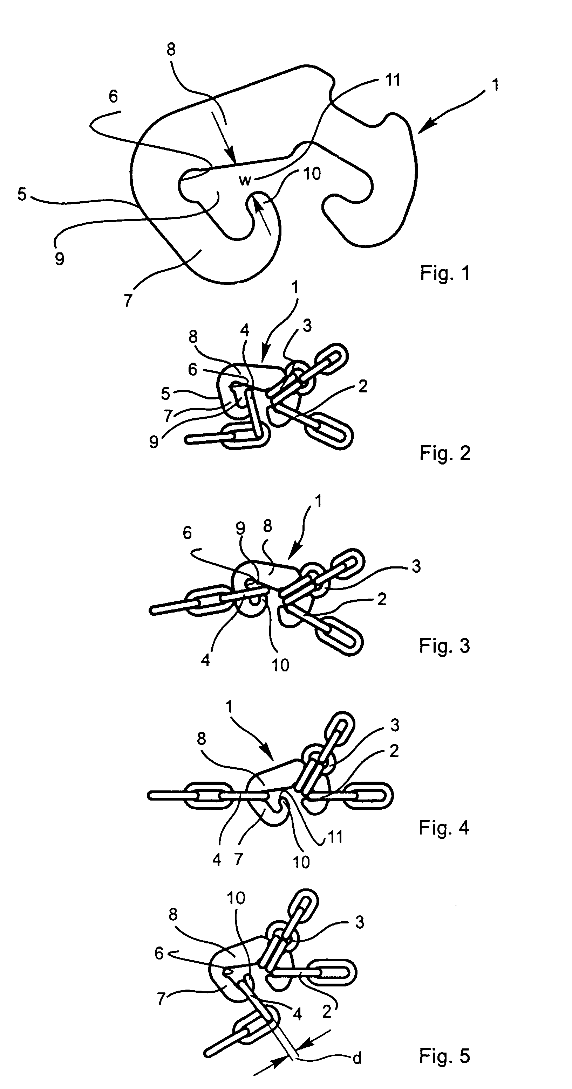

Der in den Figuren dargestellte Verschlußhaken 1 ist unverlierbar mit einem Kettenglied 2 und einem sogenannten Seitenhaken 3 des Seitenteiles einer Reifenkette verbunden, deren Kettennetz wie im Falle der AT 388 708 B eine Stoßstelle aufweist. Um die Stoßstelle nach dem Auflegen des Kettennetzes auf den Reifen zu schließen, wird in den beiden Flankenbereichen des Reifens jeweils ein an einem Ende des Kettennetzes angeordnetes Kettenglied 4 in einen am anderen Ende des Kettennetzes angeordneten Verschlußhaken 1 eingehängt. Der Verschlußhaken 1 ist zur Gewährleistung einer sicheren Verbindung der Kettennetzenden mit einer Hakenzinke 5 versehen, die einen sich an den Hakengrund 6 anschließenden Abschnitt 7 aufweist, der zusammen mit dem Rücken 8 des Verschlußhakens 1 ein V-förmiges Hakenmaul 9 begrenzt. Das freie Ende 10 der Hakenzinke 5 ist zum Rücken 8 gerichtet und bildet zusammen mit dem Abschnitt 7 eine Art Fanghaken, in den - wie in Fig. 5 angedeutet - im Falle einer Lockerung des Kettennetzes das Kettenglied 4 rutscht und so zurückgehalten wird. Ist die Lockerung auf einen verminderten Reifendruck zurückzuführen und wird dieser zur Wiederherstellung ordnungsgemäßer Verhältnisse wieder erhöht, so rutscht das Kettenglied 4 automatisch wieder in seine in Fig. 4 dargestellte Ausgangslage zurück, die zugleich die Sollage des Gliedes darstellt. Die Weite w des Einführspaltes 11 für das Kettenglied 4 ist nur wenig größer als dessen Nenndicke d.

## Patentansprüche

1. Verschlußhaken (1) für Seitenteile einer Reifenkette mit einem im wesentlichen C-förmigen Grundkörper, dessen eines Ende unverlierbar mit Teilen (2,3) der Reifenkette verbindbar ist und dessen anderes Ende einen Haken für ein zum Schließen des jeweiligen Seitenteiles dienendes Kettenglied (4) bildet, **dadurch gekennzeichnet**, daß der Rücken (8) des Hakens und ein sich an den das in ihn eingehängte Kettenglied (4) abstützenden Hakengrund (6) anschließender Abschnitt (7) der Hakenzinke (5) ein im wesentlichen V-förmiges Hakenmaul (9) begrenzen und daß das zum Rücken (8) des Hakens gerichtete freie Ende (10) der Hakenzinke (5) zusammen mit dem sich an den Hakengrund (6) anschließenden Abschnitt (7) der Hakenzinke (5) einen Fanghaken für das sich normalerweise im Hakengrund (6) abstützende Kettenglied (4) im Falle einer Lockerung des jeweiligen Seitenteiles bildet.

2. Verschlußhaken nach Anspruch 1, **dadurch gekennzeichnet**, daß das freie Ende (10) der Hakenzinke (5) und der Rücken (8) des Hakens einen Einführspalt begrenzen, dessen Weite (w) nur wenig größer als die Nenndicke des in den Haken einzuhängenden Kettengliedes (4) ist.
